# EUROPÄISCHE PATENTANMELDUNG

(11) **EP 4 147 552 A1**
(43) Veröffentlichungstag der Anmeldung: **15.03.2023**
(21) Anmeldenummer: 22401021.5
(22) Anmeldetag: 29.08.2022
(51) Int. Cl.: A01B 63/22, A01B 73/04

(54) **LANDWIRTSCHAFTLICHE ARBEITSMASCHINE UND VERFAHREN ZUM BETREIBEN EINER LANDWIRTSCHAFTLICHEN ARBEITSMASCHINE**

(30) Priorität: 08.09.2021 DE 102021123191
(71) Anmelder: Amazonen-Werke H. Dreyer SE & Co. KG, 49205 Hasbergen (DE)
(72) Erfinder: Hoffmann, Karl-Peter, 27798 Hude (DE); Möller, Wolfram, 26135 Oldenburg (DE); Hahnkemeyer, Nils, 29582 Hanstedt (DE)

(57) **Zusammenfassung**

Landwirtschaftliche Arbeitsmaschine (10) welche dazu eingerichtet ist, eine landwirtschaftliche Nutzfläche zu bearbeiten und/oder granuläres Material auszubringen, mit zumindest einem Zentralrahmen (20) und zumindest zwei um jeweils eine horizontale Schwenkachse (210A, 210B) schwenkbare Seitenrahmen (21A, 21B), welche seitlich am Zentralrahmen (20) angeordnet sind, und mit zumindest einer Verstellvorrichtung, welche den Seitenrahmen (21A, 21B) und/oder dem Zentralrahmen (20) zugeordnet ist, und welche dazu eingerichtet ist, wenigstens einen der Seitenrahmen (21A, 21B) gegenüber dem Zentralrahmen (20) zu verschwenken. Um die Flexibilität der Seitenrahmen (21A, 21B) und damit der Arbeitsmaschine (10) beim Verschwenk- und/oder Klappvorgang zwischen der Transport- und Arbeitsstellung in besonders einfacher Weise weiter zu erhöhen, ist vorgesehen, dass die Verstellvorrichtung zumindest eine zwischen den Seitenrahmen (21A, 21B) angeordnete erste Stell- und/oder Hebeeinrichtung (30) und zumindest eine zwischen einem der Seitenrahmen (21A, 21B) und dem Zentralrahmen (20) angeordnete zweite Stell- und/oder Hebeeinrichtung (40) aufweist.

## Beschreibung

Die Erfindung betrifft eine landwirtschaftliche Arbeitsmaschine gemäß dem Oberbegriff des Patentanspruches 1 und ein Verfahren zum Betreiben einer landwirtschaftlichen Arbeitsmaschine gemäß dem Oberbegriff des Patentanspruches 11.

Auf dem Gebiet der Landwirtschaft sind eine Vielzahl von Varianten gezogener, angebauter und/oder selbstfahrender Arbeitsmaschinen bekannt. Hierzu zählen neben Sämaschinen, die dazu geeignet sind, granulares Material, insbesondere Saatgut und/oder Dünger, auf der landwirtschaftlichen Nutzfläche auszubringen, unter anderem auch Bodenbearbeitungsmaschinen mittels denen der Ackerboden derartiger Nutzflächen vor- und/oder nachbereitet werden kann. Darüber hinaus gehören hierzu auch Bestellkombinationen, bestehend aus einer Sämaschine und einer Bodenbearbeitungsmaschine, welche dazu eingerichtet sind, die Ausbringung des granularen Materials und die Ackerbodenbearbeitung zu kombinieren. Um das granulare Material entsprechend auf der Nutzfläche auszubringen bzw. die Nutzfläche entsprechend zu bearbeiten, weisen derartige landwirtschaftliche Arbeitsmaschinen wenigstens ein hierfür geeignetes Arbeitswergzeug auf, welches in geeigneter Weise mit einem Rahmen der Arbeitsmaschine gekoppelt ist.

Aufgrund der für gewöhnlich besonders großen Abmessungen landwirtschaftlicher Nutzflächen weisen gattungsgemäße landwirtschaftliche Arbeitsmaschinen eine Vielzahl in und/oder quer zu einer Fahrtrichtung der Arbeitsmaschine angeordneter derartiger Arbeitswerkzeuge auf, welche insbesondere einzeln und/oder zumindest teilweise gemeinsam am Rahmen der Arbeitsmaschine angelenkt sind. Derartige Arbeitsmaschinen mit besonders großer Arbeitsbreite, welche insbesondere etwa 4 m, 6 m oder bis zu 12 m oder mehr betragen kann, sind in zumindest teilweise unterschiedlichen Stellungen betreibbar. Für den Betrieb auf der Nutzfläche, insbesondere während des Ausbringvorgangs, ist eine sogenannten Arbeitsstellung vorgesehen, während für Fahrten im öffentlichen Straßenverkehr eine sogenannte Transportstellung, insbesondere mit gesetzlich vorgegebener maximalen Breite, vorgesehen ist. Damit die Arbeitsmaschine in den unterschiedlichen Betriebsstellungen betrieben werden kann, ist der Rahmen derartiger Arbeitsmaschinen in der Regel in zumindest einen Zentralrahmen und zumindest zwei um jeweils eine, insbesondere zur Fahrtrichtung korrespondierende, horizontale Schwenkachse schwenkbare Seitenrahmen, welche seitlich am Zentralrahmen angeordnet sind, unterteilt. Insbesondere ist hierbei wenigstens einer der Seitenrahmen in Fahrtrichtung gesehen links vom Zentralrahmen angeordnet, während der wenigstens eine andere Seitenrahmen rechts vom Zentralrahmen angeordnet ist. Mit anderen Worten weist der Rahmen der Arbeitsmaschine dabei wenigstens eine zumindest im Wesentlichen mittig angeordnete Mittelsektion und wenigstens eine jeweils links und rechts von der Mittelsektion schwenkbar angeordnete Seitensektionen auf. Der Zentralrahmen bzw. die Mittelsektion verbleibt während und/oder nach dem Wechsel zwischen Arbeits- und Transportstellung in seiner ursprünglich ausgerichteten Position.

Dem Zentralrahmen und/oder den Seitenrahmen ist hierfür ferner zumindest eine Verstellvorrichtung zugeordnet, welche dazu eingerichtet ist, wenigstens einen der Seitenrahmen gegenüber dem Zentralrahmen, insbesondere zwischen der zusammengeklappten Transport- und der ausgeklappten Arbeitsstellung, zu verschwenken. Hierfür weist die Verstellvorrichtung wenigstens eine verstellbare Stell- und/oder Hebeeinrichtung auf. Je nach der Ausführungsvariante der Arbeitsmaschine, insbesondere der Verstellvorrichtung, kann die wenigstens eine Stell- und/oder Hebevorrichtung in unterschiedlicher Weise mit dem Rahmen gekoppelt und/oder verbunden sein.

Aus der DE 10 2005 052 473 A1 oder DE 10 2017 106 633 A1 sind beispielsweise Arbeitsmaschinen bekannt geworden, bei denen die Verstellvorrichtung wenigstens zwei Stell- und/oder Hebeeinrichtungen umfasst, welche jeweils zwischen einem der Seitenrahmen und dem Zentralrahmen angeordnet sind.

Bei derartig ausgeführten Arbeitsmaschinen, insbesondere Verstellvorrichtungen ist der Kraftfluss und/oder die Wirkung der Momente zwischen den Seitenrahmen und dem Zentralrahmen jedoch nachteilig. Hierbei werden die aus dem Gewicht der Seitenrahmen und/oder der daran angeordneten Arbeitswerkzeuge und dem Verschwenk- bzw. Klappvorgang resultierenden Kräfte und/oder Momente zumindest nahezu ausschließlich auf und/oder über den Zentralrahmen übertragen. Dies wiederrum wirkt sich unter anderem negativ auf die Betriebsfestigkeit des Zentralrahmens aus.

Aus dem Stand der Technik sind weiterhin auch Ausführungsvarianten von Arbeitsmaschinen, insbesondere Verstellvorrichtungen, bekannt geworden, bei denen die Verstellvorrichtung wenigstens eine Stell- und/oder Hebeeinrichtung aufweist, die zwischen den Seitenrahmen angeordnet ist. Die Seitenrahmen sind hierbei mittels der Stell- und/oder Hebeeinrichtung direkt, insbesondere kraftübertragend, miteinander gekoppelt und/oder verbunden.

Die bisher bekannten Arbeitsmaschinen, insbesondere Verstellvorrichtungen, haben den entscheidenden Nachteil, dass die Stellung der Seitenrahmen und damit der Arbeitsmaschine während des Ausbring- bzw. Bearbeitungsvorgangs und/oder während zumindest kurzzeitigen Arbeitsunterbrechungen nicht optimal und/oder mit ausreichender Flexibilität an unterschiedliche Situationen anpassbar ist. Derartige, insbesondere als Sä- und/oder Bodenbearbeitungsmaschinen ausgebildete, Arbeitsmaschinen können für gewöhnlich bisher entweder nur in vollständig ausgeklappter Arbeitsstellung oder in vollständig zusammengeklappter Transportstellung betrieben werden.

In einer Vielzahl von Situationen könnte der Ausbring- und/oder Bearbeitungsvorgang und/oder die Zugänglichkeit zur Arbeitsmaschine verbessert werden, wenn die Seitenrahmen mit höherer Flexibilität und/oder in einer für den Anwender besonders einfachen Weise zwischen der Arbeits- und Transportstellung verstellbar sind. Die der Erfindung zugrundeliegende Aufgabe besteht somit darin, die Flexibilität der Seitenrahmen, insbesondere deren Stellung, und damit der Arbeitsmaschine beim Verschwenk- und/oder Klappvorgang zwischen der Transport- und Arbeitsstellung in besonders einfacher Weise weiter zu erhöhen. Insbesondere soll dabei eine Arbeitsmaschine geschaffen werden, bei der die Kraftflüsse und/oder die Momente, die während dem Verschwenk- und/oder Klappvorgang über den Zentralrahmen übertragen werden, bei höherer Flexibilität der Arbeitsmaschine weiter verbessert werden.

Diese Aufgabe wird erfindungsgemäß dadurch gelöst, dass die Verstellvorrichtung zumindest eine zwischen den Seitenrahmen angeordnete, vorzugsweise die Seitenrahmen verbindende, erste Stell- und/oder Hebeeinrichtung und zumindest eine zwischen einem der Seitenrahmen und dem Zentralrahmen angeordnete, vorzugsweise den Seitenrahmen mit dem Zentralrahmen verbindende, zweite Stell- und/oder Hebeeinrichtung aufweist.

In Folge dieser Maßnahme sind die Kräfte und/oder Momente, die zum Verschwenken und/oder Klappen der Seitenrahmen notwendig sind, von der ersten und zweiten Stell- und/oder Hebeeinrichtung derartig beeinflussbar, dass die Seitenrahmen während dem Verschwenk- und/oder Klappvorgang in zumindest teilweise alternierender Weise zueinander und/oder gegenüber dem Zentralrahmen verstellbar sind. Somit werden während des Verschwenk- und/oder Klappvorgangs die Kräfte und/oder Momente nicht aller Seitenrahmen gleichzeitig über und/oder an den Zentralrahmen übertragen. Hierdurch sind die auf den Zentralrahmen wirkenden maximalen Belastungen bzw. Beanspruchungen besonders gering, was zu einer besonders guten bzw. hohen Betriebsfestigkeit und/oder langen Standzeit des Zentralrahmens führt. Vorzugsweise ist die erste Stell- und/oder Hebeeinrichtung hierbei dazu eingerichtet, die Kräfte zum Verschwenken und/oder Klappen der Arbeitsmaschine sowohl in den zumindest einen Seitenrahmen als auch den zumindest einen anderen Seitenrahmen einzuleiten und/oder die an den Seitenrahmen und/oder um die jeweiligen Schwenkachsen wirkenden Momente zu generieren. Ferner bevorzugt ist die zweite Stell- und/oder Hebeeinrichtung dabei dazu eingerichtet, zumindest eine weitere Kraft zum Verschwenken und/oder Klappen der Arbeitsmaschine an einem der Seitenrahmen und dem Zentralrahmen einzuleiten und/oder wenigstens ein zusätzliches Momente an einer der jeweiligen Schwenkachsen zu generieren. Mit anderen Worten kann insbesondere über die Anordnung und/oder eine Betätigung der zweiten Stell- und/oder Hebeeinrichtung festgelegt werden, in welcher Reihenfolge die beiden Seitenrahmen verschwenkbar und/oder klappbar sind.

Die erfindungsgemäße Maßnahme weist weiterhin den Vorteil auf, dass durch eine entsprechende Betätigung und/oder Ansteuerung der Stell- und/oder Hebeeinrichtungen nur der wenigstens eine auf einer Seite des Zentralrahmens angeordnete Seitenrahmen verschwenkbar und/oder klappbar ist, so dass die Arbeitsmaschine und/oder der Rahmen alternativ oder zusätzlich mit einseitig hochgeklapptem Seitenrahmen betreibbar und/oder verbingbar ist. Eine derartige halbseitige Verschwenkung und/oder Klappung des Rahmens ist beispielsweise zum Umfahren von Hindernissen und/oder zu Wartungs- und/oder Instandsetzungszwecken vorteilhaft. Besonders Vorteilhaft ist die halbseitige Verschwenkung und/oder Klappung zum Befüllen der Arbeitsmaschine, insbesondere wenigstens eines an der Arbeitsmaschine angeordneten Vorratsbehälters. Während des Befüllvorgangs und einseitig hochgeklapptem Seitenrahmen kann beispielsweise eine Befüllvorrichtung und/oder Befüllmaschine besonders frei bzw. ungehindert und einfach an die Arbeitsmaschine, insbesondere den Vorratsbehälter, herangebracht und/oder herangefahren werden. Weiterhin kann der wenigstens eine in Halbseitenstellung noch in Arbeitsstellung befindliche Seitenrahmen zum Begehen der Arbeitsmaschine für einen Bediener genutzt werden, womit die Zugänglichkeit zum Befüllen der Arbeitsmaschine in besonders hohem Maß verbessert ist.

Erfindungsgemäß sind die Seitenrahmen in Arbeitsstellung zumindest im Wesentlichen waagerecht und/oder parallel zum Boden ausgerichtet, wobei sich die Seitenrahmen ausgehend vom Zentralrahmen lateral zur Arbeitsmaschine und/oder quer zur Fahrtrichtung erstrecken. Während einer Halbseiten- und/oder Transportstellung ist wenigstens einer der Seitenrahmen von der ausgeklappten waagerechten und/oder parallel zum Boden ausgerichteten Stellung zumindest teilweise in eine vertikale und/oder senkrecht zur Fahrtrichtung gesehene Richtung verstellt. Bevorzugt ist der wenigstens eine verstellte Seitenrahmen um seine Schwenkachse um zumindest in etwa 45°, oder besonders bevorzugt um etwa 90° oder mehr, gegenüber der waagerechten Arbeitsstellung verschwenkt und/oder geklappt.

In einer bevorzugten Ausführungsform der erfindungsgemäßen Arbeitsmaschine ist die erste Stell- und/oder Hebeeinrichtung einerseits mit einem der Seitenrahmen und andererseits mit einem anderen Seitenrahmen verbunden, wobei die zweite Stell- und/oder Hebeeinrichtung einerseits mit einem der Seitenrahmen und andererseits mit dem Zentralrahmen verbunden ist. Eine oder mehrere der Stell- und/oder Hebeeinrichtungen weisen hierbei bevorzugt zumindest ein erstes Ende bzw. eine erste Stellseite und zumindest ein zweites Ende bzw. eine zweite Stellseite auf, welche mit wenigstens einem der Seitenrahmen und/oder mit dem Zentralrahmen kraftübertragend verbindbar sind. Die Stell- und/oder Hebeeinrichtung sind dabei je nach Ausführungsvariante entweder direkt und/oder unmittelbar oder alternativ mittels wenigstens einem Zwischenglied und damit mittelbar mit wenigstens einem der Seitenrahmen und/oder dem Zentralrahmen verbunden und/oder an diesen angelenkt. Besonders bevorzugt ist die wenigstens eine erste Stell- und/oder Hebeeinrichtung mit dem ersten Ende mit einem der Seitenrahmen und mit dem zweiten Ende mit einem anderen Seitenrahmen verbunden. Ferner bevorzugt ist dabei die wenigstens eine zweite Stell- und/oder Hebeeinrichtung mit dem ersten Ende mit einem der Seitenrahmen und mit dem zweiten Ende mit dem Zentralrahmen verbunden. Die Ausführungsform hat den Vorteil, dass die von den Stell- und/oder Hebeeinrichtung eingeleiteten und/oder generierten Kräfte und/oder Momente zumindest im Wesentlichen direkt und/oder zumindest nahezu verzögerungsfrei zum Zentralrahmen und/oder den Seitenrahmen übertragbar sind.

In einer Weiterbildung der erfindungsgemäßen Arbeitsmaschine ist die zweite Stell- und/oder Hebeeinrichtung, während des Betriebs und einer ausgeklappten Arbeitsstellung der Seitenrahmen, zumindest nahezu stellkraftfrei vom Zentralrahmen und/oder von dem mit der zweiten Stell- und/oder Hebeeinrichtung verbundenen Seitenrahmen entkoppelt. Je nach Ausführungsvariante kann entweder nur eines der beiden Enden bzw. Stellseiten oder können beide Enden bzw. Stellseiten der zweiten Stell- und/oder Hebeeinrichtung in Arbeitsstellung stellkraftfrei entkoppelt sein. Mit anderen Worten werden während der Arbeitsstellung zumindest im Wesentlichen keine Stellkräfte zwischen der zweiten Stell- und/oder Hebeeinrichtung und dem wenigstens einen Seitenrahmen und/oder dem Zentralrahmen übertragen. Hierdurch ist eine Wechselwirkung zwischen den Seitenrahmen und dem Zentralrahmen während des Ausbring- und/oder Bearbeitungsvorgangs zumindest nahezu ausgeschlossen.

In einer anderen bevorzugten Ausführungsform der erfindungsgemäßen Arbeitsmaschine ist mittels der ersten Stell- und/oder Hebeeinrichtung zum Verschwenken wenigstens eines der Seitenrahmen, insbesondere für eine Transport- und/oder Halbseitenstellung, ein um die jeweiligen Schwenkachsen der Seitenrahmen angreifendes Drehmoment in die Seitenrahmen einleitbar, wobei mittels der zweiten Stell- und/oder Hebeeinrichtung wenigstens ein zu einer der angreifenden Drehmomente zusätzliches und/oder korrespondierendes Ergänzungsmoment generierbar und/oder in einen der Seitenrahmen einleitbar ist. Die Dreh- bzw. Wirkrichtung und/oder der Angriffspunkt des Ergänzungsmoments entsprechen hierbei zumindest nahezu der Dreh- bzw. Wirkrichtung und/oder dem Angriffspunkt des an dem Seitenrahmen eingeleiteten und/oder angreifenden Drehmoments zum Verschwenken und/oder Klappen des einen mit der zweiten Stell- und/oder Hebeeinrichtung verbundenen Seitenrahmens. Folglich wird bei einer derartigen Anordnung bevorzugt zuerst der mit der zweiten Stell- und/oder Hebeeinrichtung verbundene Seitenrahmen, an dem das Ergänzungsmoment wirkt, von der Arbeitsstellung in die Transport- und/oder Halbseitenstellung verschwenkt, bevor der jeweils andere Seitenrahmen durch die erste Stell- und/oder Hebeeinrichtung verschwenkt und/oder geklappt wird. Diese Ausführungsform erlaubt eine alternierende und/oder in fester Reihenfolge vorgegebene Verschwenkung der Seitenrahmen, bei gleichzeitig besonders einfacher Ausführung der Arbeitsmaschine, die zudem für den Anwender bzw. Bediener besonders komfortabel ist.

In einer anderen Weiterbildung der erfindungsgemäßen Arbeitsmaschine ist das Ergänzungsmoment vom Betrag kleiner als das um die jeweilige Schwenkachse angreifende und/oder einleitbare Drehmoment. Folglich resultiert an einer der mehreren Schwenkachsen ein aus dem einen eingeleiteten und/oder angreifenden Drehmoment und dem eingeleiteten und/oder angreifenden Ergänzungsmoment zusammengefasstes Gesamtmoment, welches insbesondere das an dem anderen Seitenrahmen angreifende Drehmoment zumindest im Wesentlichen übersteigt. Diese Ausführungsform hat den Vorteil, dass die Seitenrahmen während des Verschwenkvorgangs bereits durch die ungleich resultierenden Kräfte und/oder Momente um die jeweiligen Schwenkachsen in alternierender Weise verschwenkt werden. Ein somit erforderliches verhältnismäßig kleines Ergänzungsmoment, weist weiterhin den Vorteil auf, dass die zweite Stell- und/oder Hebeeinrichtung mit verhältnismäßig geringem Leistungsspektrum und/oder geringen Abmessungen ausgeführt sein kann und damit besonders kostengünstig ist.

In einer weiteren bevorzugten Ausführungsform der erfindungsgemäßen Arbeitsmaschine ist mittels der ersten Stell- und/oder Hebeeinrichtung, zum Verschwenken wenigstens eines der Seitenrahmen, insbesondere für eine Transport- und/oder Halbseitenstellung, ein um die jeweiligen Schwenkachsen der Seitenrahmen angreifendes Drehmoment in die Seitenrahmen einleitbar, wobei mittels der zweiten Stell- und/oder Hebeeinrichtung wenigstens ein zu einer der angreifenden Drehmomente gegensätzliches Ergänzungsmoment generierbar und/oder in einen der Seitenrahmen einleitbar ist. Die Dreh- bzw. Wirkrichtung des Ergänzungsmoments ist hierbei gegensinnig bzw. gegensätzlich zur Dreh- bzw. Wirkrichtung des an dem Seitenrahmen eingeleiteten und/oder angreifenden Drehmoments zum Verschwenken und/oder Klappen des einen mit der zweiten Stell- und/oder Hebeeinrichtung verbundenen Seitenrahmens. Somit wird einer der Seitenrahmen während des Verschwenkvorgangs gleichzeitig durch die erste Stell- und/oder Hebeeinrichtung nach oben und von der zweiten Stell- und/oder Hebeeinrichtung nach unten gedrückt. Demnach wird hierbei während dem Verschwenkvorgang und/oder dem Wirken des Ergänzungsmoments derjenige Seitenrahmen verschwenkt und/oder geklappt der nicht mit der zweiten Stell- und/oder Hebeeinrichtung verbunden ist.

In einer weiteren Weiterbildung der erfindungsgemäßen Arbeitsmaschine ist das Ergänzungsmoment vom Betrag größer als das um die jeweilige Schwenkachse angreifende und/oder einleitbare Drehmoment. Demnach wird hierbei an einem der Seitenrahmen das durch die erste Stell- und/oder Hebeeinrichtung eingeleitete Drehmoment während des Verschwenkvorgangs durch das von der zweiten Stell- und/oder Hebeeinrichtung eingeleitete Ergänzungsmoment überlagert, so dass der Seitenrahmen während des Verschwenkvorgangs des anderen Seitenrahmens zumindest nahezu in Arbeitsstellung verbleibt.

Weiterhin ist die Verstellvorrichtung bei der erfindungsgemäßen Arbeitsmaschine bevorzugt zumindest teilweise fluidisch, insbesondere hydraulisch und/oder pneumatisch, betreibbar ausgebildet. Die Verstellvorrichtung ist besonders bevorzugt fluidleitend einer der Arbeitsmaschine zugeordneten und/oder an einer am Zugfahrzeug angeordneten Druckerzeugungs- und/oder Druckversorgungseinrichtung verbunden. Die Druckerzeugungs- und/oder Druckversorgungseinrichtung kann dabei vorzugsweise nach Art einer Schlepperhydraulik ausgeführt sein. Alternativ oder zusätzlich kann auch die Arbeitsmaschine mit wenigstens einer für die Verstellvorrichtung vorgesehenen, insbesondere nach Art einer Bordhydraulik ausgebildeten, Druckerzeugungs- und/oder Druckversorgungseinrichtung ausgestattet sein.

Darüber hinaus ist eine erfindungsgemäße Arbeitsmaschine bevorzugt, bei der eine mit fluidischem Druck beaufschlagbare Stellseite der ersten Stell- und/oder Hebeeinrichtung, vorzugsweise dauerhaft, fluidleitend mit einer mit fluidischem Druck beaufschlagbaren Stellseite der zweiten Stell- und/oder Hebeeinrichtung verbindbar ist. Die beiden miteinander verbindbaren Stellseiten sind bevorzugt direkt und/oder ohne dazwischen angeordnetem Ventil über zumindest eine Fluidleitung miteinander gekoppelt. Durch eine derartige Ausführungsform ist die Arbeitsmaschine, insbesondere die Betätigung der Verstellvorrichtung und/oder Stell- und/oder Hebeeinrichtungen, besonders einfach und kostengünstig ausgeführt.

Bevorzugt wird der Druck für die entsprechenden Stellseiten hierbei bedarfsgerecht über die zugeordnete Druckversorgungs- und/oder Druckerzeugungseinrichtung bereitgestellt.

In einer anderen bevorzugten Ausführungsform der erfindungsgemäßen Arbeitsmaschine weist die zweite Stell- und/oder Hebeeinrichtung wenigstens eine weitere Stellseite auf, welche, insbesondere während einem Verschwenken des damit verbundenen Seitenrahmens oder im Betrieb in einer ausgeklappten Arbeitsstellung, fluidisch zumindest im Wesentlichen entlastet, vorzugsweise zumindest nahezu drucklos und/oder stellkraftfrei, betreibbar ist. Bevorzugt ist die weitere Stellseite hierbei fluidleitend mit einem der Druckversorgungs- und/oder Druckerzeugungseinrichtung, insbesondere der Schlepperhydraulik, zugeordneten Fluidtank verbunden, so dass das Fluid beispielsweise beim Verdrängen des Fluids aus der zweiten Stellseite zum Fluidtank entweichen kann und/oder andersherum aus dem Fluidtank wieder angesaugt werden kann. Alternativ wäre hierbei auch eine Entlastung zur Umgebung bzw. zum Umgebungsdruck denkbar. Durch eine derartige Ausführungsform ist die zweite Stell- und/oder Hebeeinrichtung während der Arbeitsstellung in besonders einfacher Weise stellkraftfrei von dem damit verbunden Seitenrahmen und/oder dem Zentralrahmen entkoppelt.

Die Erste und/oder zweite Stell- und/oder Hebeeinrichtung ist bevorzugt nach Art eines hydraulischen und/oder pneumatischen Stellantriebs, insbesondere eines Stellzylinders, ausgebildet. Wenigstens einer oder mehrere der Stell- und/oder Hebeeinrichtungen sind dabei besonders bevorzugt einfachwirkend oder doppelwirkend ausgeführt, wobei auch unterschiedlich ausgeführte Stell- und/oder Hebeeinrichtungen denkbar sind. Darüber hinaus sind alternativ oder zusätzlich auch als Drehantriebe ausgebildete Stell- und/oder Hebeeinrichtungen denkbar. Die Stell- und/oder Hebeeinrichtungen können weiterhin alternativ oder zusätzlich auch über Zwischenglieder wie beispielsweise Kniehebel und/oder Seilzüge mit den jeweiligen Seitenrahmen und/oder dem Zentralrahmen gekoppelt und/oder verbunden sein.

Ferner ist hierbei der Arbeitsmaschine wenigstens ein, insbesondere hydraulisches, pneumatisches und/oder elektrisches Steuer- und/oder Regelsystem zugeordnet. Das Steuer- und/oder Regelsystem umfasst besonders bevorzugt zumindest einen der Arbeitsmaschine zugeordneten Jobrechner und/oder ein, insbesondere mobiles, Bedien- und/oder Anzeigemittel bzw. ein der Arbeitsmaschine zugeordnetes Terminal.

Bei einer besonders bevorzugten Ausführungsform der erfindungsgemäßen Arbeitsmaschine ist die Verstellvorrichtung, insbesondere die Stell- und/oder Hebeeinrichtungen vorzugsweise manuell durch einen Bediener oder automatisiert, in fernbetätigter Weise mittels dem Steuer- und/oder Regelsystem betätigbar. Darüber hinaus ist der Verstellvorrichtung und/oder wenigstens einem der Seitenrahmen vorzugsweise wenigstens eine Sensoreinrichtung zugeordnet, welche dazu eingerichtet ist, eine aktuelle Stellung wenigstens eines oder mehrerer Seitenrahmen zu erfassen. Das Steuer- und/oder Regelsystem ist hierbei besonders bevorzugt dazu eingerichtet, die Druckversorgungs- und/oder Druckerzeugungseinrichtung und damit die Verstellvorrichtung in Abhängigkeit der erfassten Stellung der Seitenrahmen anzusteuern und/oder zu regeln. Demnach kann beispielsweise vorgesehen sein, dass der Druck des Fluids innerhalb der Verstellvorrichtung nur so lange von der Druckversorgungs- und/oder Druckerzeugungseinrichtung generiert und/oder bereitgestellt wird, bis einer der Seitenrahmen vollständig verschwenkt, insbesondere die Halbseitenstellung erreicht, ist.

Darüber hinaus ist eine alternative Ausführungsform bevorzugt, bei er wenigstens eine der Stell- und/oder Hebeeinrichtungen als elektrisch betätigbarer und/oder beaufschlagbarer Aktor ausgebildet ist. Insbesondere wäre hierbei ein elektrischer Stellantrieb nach Art eines elektrischen Stellzylinders, eines Drehantriebs oder dergleichen denkbar.

Die der Erfindung zugrunde liegende Aufgabe wird ebenso mit einem Verfahren zum Betreiben einer landwirtschaftlichen Arbeitsmaschine gelöst, wobei einer der Seitenrahmen, vorzugsweise zum Umfahren eines Hindernisses und/oder zu Wartungs- und/oder Instandsetzungszwecken, und/oder besonders bevorzugt zum Befüllen der Arbeitsmaschine, mittels der Verstellvorrichtung, insbesondere von der ausgeklappten Arbeitsstellung in die zusammengeklappte Transportstellung, verschwenkt wird, während der zumindest eine andere Seitenrahmen zumindest nahezu in der ausgeklappten Arbeitsstellung oder der zusammengeklappten Transportstellung verbleibt. Hinsichtlich der Vorteile und Modifikationen des erfindungsgemäßen Verfahrens wird zunächst auf die Vorteile und Modifikationen der erfindungsgemäßen Arbeitsmaschine verwiesen.

In einer besonders bevorzugten Weiterbildung des erfindungsgemäßen Verfahrens werden die Seitenrahmen, insbesondere vom Steuer- und/oder Regelsystem, in einer fest vorgegebenen und/oder definierten Reihenfolge, insbesondere von der ausgeklappten Arbeitsstellung in die zusammengeklappte Transportstellung, verschwenkt.

Darüber hinaus kann es insbesondere auch zweckmäßig sein einen der Seitenrahmen, vorzugsweise zum Umfahren eines Hindernisses und/oder zu Wartungs- und/oder Instandsetzungszwecken, und/oder besonders bevorzugt zum Befüllen der Arbeitsmaschine, mittels der Verstellvorrichtung von der zusammengeklappten Transportstellung in die ausgeklappte Arbeitsstellung zu verschwenken, während der zumindest eine andere Seitenrahmen zumindest nahezu in der zusammengeklappten Transportstellung verbleibt.

Weiterhin können wenigstens drei unterschiedliche Stellungen, insbesondere eine Arbeitsstellung, eine Halbseitenstellung und/oder eine Transportstellung, vorgesehen und/oder vorgebbar sein die vom Steuer- und/oder Regelsystem automatisiert und/oder von dem Bediener manuell, insbesondere mittels einem Bedien- und/oder Anzeigemittel, auswählbar sind.

Bei einer weiteren besonders bevorzugten Ausführungsform des erfindungsgemäßen Verfahrens weist die Verstellvorrichtung zumindest eine zwischen den Seitenrahmen angeordnete, vorzugsweise die Seitenrahmen verbindende, erste Stell- und/oder Hebeeinrichtung und zumindest eine zwischen einem der Seitenrahmen und dem Zentralrahmen angeordnete, vorzugsweise den Seitenrahmen mit dem Zentralrahmen verbindende, zweite Stell- und/oder Hebeeinrichtung auf, wobei über die erste Stell- und/oder Hebeeinrichtung ein um die jeweiligen Schwenkachsen der Seitenrahmen angreifendes Drehmoment generiert wird, während über die zweite Stell- und/oder Hebeeinrichtung wenigstens ein zu einer der angreifenden Drehmomente zusätzliches oder gegensätzliches Ergänzungsmoment generiert und/oder in einen der Seitenrahmen eingeleitet wird.

In einer weiteren besonders bevorzugten Weiterbildung des erfindungsgemäßen Verfahrens ist die zweite Stell- und/oder Hebeeinrichtung mit einem der Seitenrahmen verbunden, wobei das Ergänzungsmoment, insbesondere durch eine vom Steuer- und/oder Regelsystem initiierte Betätigung, derart von der zweiten Stell- und/oder Hebeeinrichtung generiert wird, dass, vorzugsweise zum Befüllen der Arbeitsmaschine, ausschließlich oder vorrangig der mit der zweiten Stell- und/oder Hebeeinrichtung verbundene Seitenrahmen von der Arbeitsstellung in die Transportstellung verschwenkt wird.

Bei einer anderen vorteilhaften Ausführungsform des erfindungsgemäßen Verfahrens ist die zweite Stell- und/oder Hebeeinrichtung mit einem der Seitenrahmen verbunden, wobei das Ergänzungsmoment, insbesondere durch eine vom Steuer- und/oder Regelsystem initiierte Betätigung, derart von der zweiten Stell- und/oder Hebeeinrichtung generiert wird, dass, vorzugsweise zum Befüllen der Arbeitsmaschine, ausschließlich oder vorrangig der nicht mit der zweiten Stell- und/oder Hebeeinrichtung verbundene Seitenrahmen von der Arbeitsstellung in die Transportstellung verschwenkt wird.

Weitere Einzelheiten der Erfindung sind der Beispielsbeschreibung und den Zeichnungen zu entnehmen. Die Zeichnungen zeigen
- Fig.1: eine landwirtschaftliche Arbeitsmaschine in ausgeklappter Arbeitsstellung und in perspektivischer Ansicht von hinten;
- Fig.2: die Arbeitsmaschine aus Fig. 1 in halbseitiger Transportstellung;
- Fig.3: ein Rahmen der Arbeitsmaschine aus Fig.1 mit zugeordneten und erfindungsgemäßen Stell- und/oder Hebeeinrichtungen; und
- Fig.4: eine schematisch vereinfachter hydraulischer Schaltplan zum Betreiben der Stell- und/oder Hebeeinrichtungen.

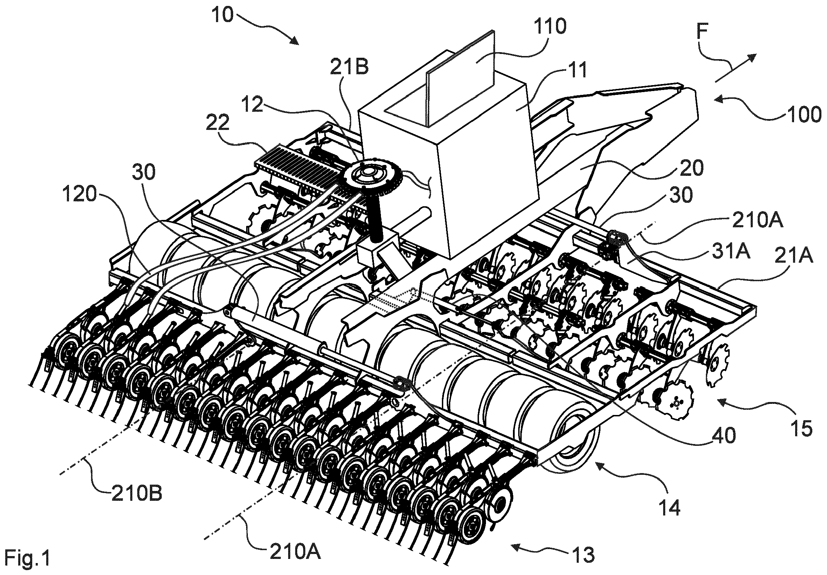

Eine als Sä- und/oder Bodenbearbeitungsmaschine ausgebildete landwirtschaftliche Arbeitsmaschine 10 zum Ausbringen, insbesondere Ablegen, von granularem Material und/oder zum Bearbeiten und/oder Behandeln eines Ackerbodens einer landwirtschaftlichen Nutzfläche ist in der Fig.1 gezeigt. Die Arbeitsmaschine 10 ist in einer während eines Ausbring- und/oder Bearbeitungsvorgangs vollständig ausgeklappten und/oder abgesenkten Arbeitsstellung dargestellt und weist eine an der Vorderseite ausgebildete Zugdeichsel 100 auf, über welche die Arbeitsmaschine 10 von einer nicht gezeigten Zugmaschine, insbesondere einem Schlepper, in einer Fahrtrichtung F gezogen werden kann. Alternativ dazu kann die Arbeitsmaschine 10 aber auch getragen oder selbstfahrend ausgebildet sein.

Die Arbeitsmaschine 10 umfasst einen Rahmen, welcher in einen, insbesondere mittig angeordneten, Zentralrahmen 20 und jeweils seitlich, insbesondere links und rechts zur Fahrtrichtung F gesehen, schwenkbar am Zentralrahmen 20 angeordnete Seitenrahmen 21A, 21B unterteilt ist. Der Zentralrahmen und die Seitenrahmen können alternativ auch als Mittelsektion 20 oder Seitensektionen 21A, 21B bezeichnet werden. Weiterhin können alternativ dazu auch weitere Seitenrahmen vorgesehen sein, welche, insbesondere seitlich und/oder schwenkbar, an den vorhandenen Seitenrahmen 21A, 21B angeordnet sind.

Entlang des Zentralrahmens 20 ist ferner ein Vorratsbehälter 11 zu sehen, welcher zum Vorhalten des auszubringenden granularen Materials, insbesondere Saatguts und/oder Düngers, vorgesehen ist und zum Befüllen wenigstens ein an der Oberseite angeordnetes Abdeckmittel 110, insbesondere einen verschließbaren Deckel, aufweist. Der Arbeitsmaschine 10 ist darüber hinaus beispielhaft ein pneumatisches Fördersystem, insbesondere mit zumindest einem Gebläse und/oder einer Förderleitung, zugeordnet, welche in den Figuren nicht zu sehen ist, jedoch mit dem Vorratsbehälter 11, insbesondere einer am Vorratsbehälter 11 angeordneten Dosierschleuse, fluidleitend gekoppelt ist. Das aus dem Vorratsbehälter 11, insbesondere über die Dosierschleuse, bedarfsgerecht ausgeschleuste granulare Material kann hierbei über das Fördersystem in pneumatisch getragener Weise zu einer im hinteren Bereich der Arbeitsmaschine 10 angeordneten Verteileinrichtung 12, welche hierbei beispielhaft nach Art eines Verteilerkopfes ausgebildet ist, zugebracht und/oder gefördert werden. Ausgehend von der Verteileinrichtung 12 ist das granulare Material über Ausbringleitungen 120 zu einer Vielzahl quer zur Fahrtrichtung F ebenfalls im hinteren Bereich der Arbeitsmaschine 10 angeordneter als Materialablageeinrichtungen 13 ausgebildeter Arbeitswerkzeuge zubringbar und mittels dieser entlang der Nutzfläche ablegbar. Die hier dargestellten Materialablageeinrichtungen 13 umfassen beispielhaft neben jeweils wenigstens einem Furchenöffnungselement, welches hier als Doppelscheibenschar ausgebildet ist, und einem Tiefenführungselement auch eine Vorrichtung zum Verschießen und/oder Andrücken einer Furche und/oder des ausgebrachten Materials. Die Materialablageeinrichtungen 13 können in einer alternativen Ausführungsform selbstverständlich auch anders ausgebildete und/oder kombinierte Furchenöffnungselement, Tiefenführungselement und/oderVorrichtungen zum Verschießen und/oder Andrücken einer Furche umfassen. Beispielweise wären hier auch Zinkenschare, Striegel oder dergleichen denkbar.

In Fahrtrichtung F vor den Materialablageeinrichtungen 13 sind weitere Arbeitswerkzeuge an der Arbeitsmaschine 10 angeordnet, welche zum einen beispielhaft als unterteilte Walze 14, insbesondere nach Art eines Reifenpackers, oder zum anderen als vorlaufende Bodenbearbeitungswerkzeuge 15 ausgebildet sind. Die unterschiedlichen Arbeitswerkzeuge 13 - 15 sind jeweils in einer Vielzahl quer zur Fahrtrichtung F am Zentralrahmen 20 und/oder an den Seitenrahmen 21A, 21B angelenkt.

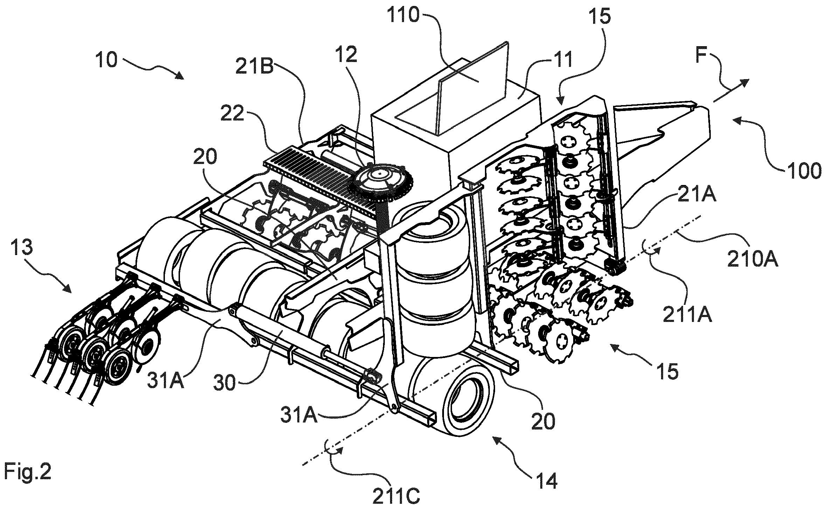

Um die Arbeitsmaschine 10 in unterschiedlichen Stellungen betreiben zu können, wie beispielsweise zum Transportieren über den öffentlichen Straßenverkehr und/oder während Ausbring- und/oder Bearbeitungsunterbrechungen, wie beispielsweise zu Wartungs- und/oder Befüllzwecken, sind die Seitenrahmen 21A, 21B jeweils in eine sogenannte Transportstellung verschwenkbar ausgebildet. Die Fig.2 zeigt die Arbeitsmaschine 10 in einer halbseitigen Transportstellung, bei der nur einer der Seitenrahmen 21A in vertikaler Richtung nach oben bzw. in Transportstellung verschwenkt und/oder geklappt ist. Alternativ oder zusätzlich kann hierbei auch der andere Seitenrahmen 21B in vertikaler Richtung nach oben bzw. in Transportstellung verschwenkt und/oder geklappt werden. Beide Seitenrahmen 21A, 21B sind hierbei um jeweils eine, insbesondere zur Fahrtrichtung F korrespondierende, horizontale Schwenkachse 210A, 210B verschwenkbar und/oder klappbar ausgebildet.

Zum Verschwenken und/oder Klappen der Seitenrahmen 21A, 21B weist die Arbeitsmaschine 10 zumindest eine Verstellvorrichtung auf, welche den Seitenrahmen 21A, 21B und/oder dem Zentralrahmen 20 zugeordnet ist, und welche dazu eingerichtet ist, wenigstens einen der Seitenrahmen 21A, 21B gegenüber dem Zentralrahmen 20, insbesondere zwischen der zusammengeklappten Transport- und der ausgeklappten Arbeitsstellung, zu verschwenken.

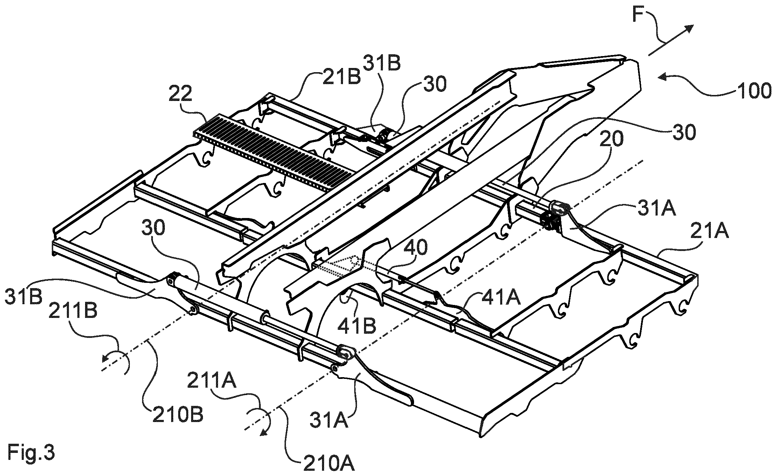

Erfindungsgemäß umfasst die Verstellvorrichtung zumindest eine zwischen den Seitenrahmen 21A, 21B angeordnete, insbesondere die Seitenrahmen 21A, 21B verbindende, erste Stell- und/oder Hebeeinrichtung 30 und zumindest eine zwischen einem der Seitenrahmen 21A und dem Zentralrahmen 20 angeordnete, insbesondere den Seitenrahmen 21A mit dem Zentralrahmen verbindende, zweite Stell- und/oder Hebeeinrichtung 40, welche in der Fig.3 gut zu sehen sind. Das dargestellte Ausführungsbeispiel zeigt beispielhaft zwei erste Stell- und/oder Hebeeinrichtungen 30 und nur eine zweite Stell- und/oder Hebeeinrichtung 40. An dieser Stelle sei explizit nochmal darauf hingewiesen, dass die erste und/oder zweite Stell- und/oder Hebeeinrichtung 30, 40 auch in anderer Anzahl ausgeführt und/oder an anderer Stelle innerhalb der Arbeitsmaschine 10 angeordnet sein können. Beispielsweise kann alternativ oder zusätzlich die zweite Stell- und/oder Hebeeinrichtung 40 auch zwischen dem anderen Seitenrahmen 21B und dem Zentralrahmen 20 angeordnet sein oder nur eine einzige erste Stell- und/oder Hebeeinrichtung 30 die beiden Seitenrahmen 21A, 21B miteinander verbinden.

Weiterhin ist zu sehen, dass die erste Stell- und/oder Hebeeinrichtung 30 einerseits, insbesondere mittels zumindest einem ersten Zwischenglied 31A, mit dem Seitenrahmen 21A und andererseits, insbesondere mittels zumindest einem zweiten Zwischenglied 31B, mit dem anderen Seitenrahmen 21B verbunden ist. Des Weiteren ist hierbei auch die zweite Stell- und/oder Hebeeinrichtung 40 einerseits, insbesondere mittels zumindest einem dritten Zwischenglied 41A, mit dem Seitenrahmen 21A und andererseits, insbesondere mittels zumindest einem vierten Zwischenglied 41B, mit dem Zentralrahmen 20 verbunden. Die Zwischenglieder 31A-B, 41A-B sind hierbei beispielhaft als schwenkbar gelagerte Flacheisen ausgebildet, wobei alternativ oder zusätzlich auch aus Kettenglieder, Draht oder dergleichen bestehende Zwischenglieder 31A-B, 41A-B denkbar wären. Ferner wäre es auch denkbar auf die Zwischenglieder 31A-B, 41A-B zumindest teilweise oder vollständig zu verzichten und die Stell- und/oder Hebeeinrichtungen 30, 40 direkt bzw. unmittelbar mit den Seitenrahmen 21A, 21B bzw. dem Zentralrahmen 20 zu verbinden.

Die erste Stell- und/oder Hebeeinrichtung 30 ist zum Verschwenken der Seitenrahmen 21A, 21B in die Transportstellung dazu eingerichtet, ein um die jeweiligen Schwenkachsen 210A, 210B der Seitenrahmen 21A, 21B angreifendes Drehmoment 211A, 211B zu generieren und/oder in die Seitenrahmen 21A, 21B einzuleiten. Um die Seitenrahmen 21A, 21B in alternierender Art und Weise bzw. nacheinander in die Transportstellung schwenken und/oder klappen zu können, ist die zweite Stell- und/oder Hebeeinrichtung 40 dazu eingerichtet, wenigstens ein zu einer der angreifenden Drehmomente 211A, 211B zusätzliches und/oder korrespondierendes Ergänzungsmoment 211C zu generieren und/oder in einen der Seitenrahmen 21A, 21B einzuleiten. In dem gezeigten Ausführungsbeispiel ist das Ergänzungsmoment 211C mittels der zweiten Stell- und/oder Hebeeinrichtung 40 um die Schwenkachse 211A generierbar und/oder in den Seitenrahmen 21 einleitbar. Das Ergänzungsmoment 211C ist hierbei vom Betrag kleiner als das um die Schwenkachse 210A angreifende und/oder einleitbare Drehmoment 211A und dient insbesondere dazu, die erste Stell- und/oder Hebeeinrichtung 30 beim Verschwenken und/oder Klappen des Seitenrahmens 21A zu unterstützen und diesen Seitenrahmen 21A somit vor dem anderen Seitenrahmen 21B zu verschwenken und/oder zu klappen. Erst wenn der Seitenrahmen 21A vollständig in Transportstellung geklappt und/oder verschwenkt ist und die erste Stell- und/oder Hebeeinrichtung 30 weiterhin betätigt bzw. beaufschlagt wird, wird der andere Seitenrahmen 21A in vertikaler Richtung nach oben in Transportstellung geschwenkt und/oder geklappt.

In einer zur gezeigten alternativen Ausführungsvariante kann die zweiten Stell- und/oder Hebeeinrichtung 40 dazu eingerichtet sein, ein zum angreifenden Drehmoment 211A gegensätzliches Ergänzungsmoment 211C zu generieren und/oder in den Seitenrahmen 21A einzuleiten. Das Ergänzungsmoment 211C wäre in diesem Fall vom Betrag her größer als das um die Schwenkachse 210A angreifende und/oder in den Seitenrahmen 21A eingeleitete Drehmoment, so dass der Seitenrahmen 21A mit anderen Worten von der zweiten Stell- und/oder Hebeeinrichtung 40 nach unten und/oder gegen den Boden gedrückt wird.

Während dessen wird in diesem Ausführungsbeispiel der andere Seitenrahmen 21B von der ersten Stell- und/oder Hebeeinrichtung 40 zuerst in Transportstellung geschwenkt und/oder geklappt.

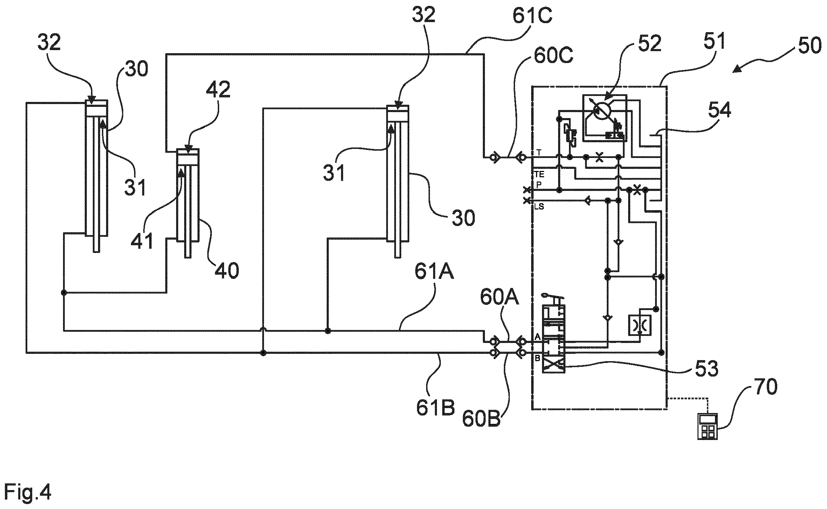

Die Verstellvorrichtung zum Verschwenken der Seitenrahmen 21A, 21B ist in diesem Ausführungsbeispiel zumindest teilweise fluidisch, insbesondere hydraulisch und/oder pneumatisch, betreibbar ausgebildet und ist gemäß dem in Fig.4 gezeigten hydraulischen Schaltplan betätigbar bzw. beaufschlagbar. Demnach ist der Arbeitsmaschine 10 eine Druckerzeugungs- und/oder Druckversorgungseinrichtung 51 zugeordnet, welche nach Art einer Schlepperhydraulik 50 ausgebildet und an der nicht gezeigten Zugmaschine angeordnet ist. Die Druckerzeugungs- und/oder Druckversorgungseinrichtung 51 umfasst hierbei eine Fördervorrichtung 52, insbesondere eine Hydraulikpumpe, welche dazu eingerichtet ist, ein Fluid, insbesondere ein Hydrauliköl oder Druckluft, entlang fluidleitender Leitungen zu fördern. Die Druckerzeugungs- und/oder Druckversorgungseinrichtung 51 umfasst des Weiteren wenigstens ein Fluidreservoir 54 nach Art eines Behälters bzw. Tanks und wenigstens ein hydraulisches und/oder pneumatisches Steuergerät 53 bzw. Steuerventil, wobei das Fluid je nach Stellung des Steuergeräts 53 mittels der Fördervorrichtung 52 aus dem Fluidreservoir 54 über das Steuergerät 53 zu der ersten und/oder zweiten Stell- und/oder Hebeeinrichtung 30, 40 förderbar und/oder zuleitbar ist.

Weiterhin sind der Arbeitsmaschine 10, insbesondere der Verstellvorrichtung, fluidleitende Druckleitungen 61A, 61B, 61C zugeordnet, die mittels fluidleitenden Verbindungskupplungen 60A-60C, beispielsweise nach Art von Steckkupplungen, mit der Druckerzeugungs- und/oder Druckversorgungseinrichtung 51 verbunden sind. Die Stell- und/oder Hebeeinrichtungen 30, 40 sind hierbei nach Art von fluidisch, insbesondere hydraulisch und/oder pneumatisch, betreibbarer und/oder beaufschlagbarer linearer Stellantriebe, insbesondere Stellzylinder, ausgebildet, die über die Druckleitungen 61A, 61B, 61C bedarfsgerecht von der Druckerzeugungs- und/oder Druckversorgungseinrichtung 51 mit Druck beaufschlagbar sind. Die Stell- und/oder Hebeeinrichtungen 30, 40 sind beispielhaft doppelwirkend ausgebildet und umfassen damit jeweils eine mit fluidischem Druck beaufschlagbare erste und zweite Stellseite 30, 31, 40, 41.

Eine erste Druckleitung 61A verbindet dabei die erste Stellseite 31 der ersten Stell- und/oder Hebeeinrichtung 30 mit einer ersten Verbindungskupplung 61A. Beispielhaft sei hierbei auch die erst Stellseite 41 der zweiten Stell- und/oder Hebeeinrichtung 40 über die erste Druckleitung 61A mit der ersten Verbindungskupplung 61A verbunden, womit die erste Stellseite 31 der ersten Stell- und/oder Hebeeinrichtung 30 dauerhaft fluidleitend mit der ersten Stellseite 41 der zweiten Stell- und/oder Hebeeinrichtung 40 verbunden ist. Durch eine derartige Ausführungsform kann auf zusätzliche Ventile entlang der Druckleitung 61A und/oder ein zusätzliches hydraulisches Steuergerät verzichtet werden.

Wird die Druckerzeugungs- und/oder Druckversorgungseinrichtung 51, insbesondere die Fördervorrichtung 52 und/oder das Steuergerät 53, entsprechend angesteuert und/oder betätigt, wird die erste Druckleitung 61A und damit die ersten Stellseiten 31, 41 der Stell und/oder Hebeeinrichtungen 30, 40 mit Druck beaufschlagt. Ist auf der ersten Stellseite 31, 41 eine positive Druckdifferenz zur zweiten Stellseite 32, 42 erreicht, fahren bzw. ziehen die Stell und/oder Hebeeinrichtungen 30, 40 mit einer definierten Stellkraft ein und schwenken bzw. klappen somit wenigstens einen der Seitenrahmen 21A, 21B in die Transportstellung hoch, da insbesondere so das um die jeweiligen Schwenkachsen 210A, 210B angreifende Drehmoment 211A, 211B und das Ergänzungsmoment 211C generiert und/oder in die Seitenrahmen 21A, 21B eingeleitet wird.

Des Weiteren verbindet eine zweite Druckleitung 61B die zweite Stellseite 32 der ersten Stell- und/oder Hebeeinrichtung 30 mit der zweiten Verbindungskupplung 61B der Druckerzeugungs- und/oder Druckversorgungseinrichtung 51. Eine dritte Druckleitung 61C verbindet ferner die zweite Stellseite 42 der zweiten Stell- und/oder Hebeeinrichtung 40 mit einer dritten Verbindungskupplung 61B der Druckerzeugungs- und/oder Druckversorgungseinrichtung 51. Eine derartige Anordnung erlaubt es einerseits die zweite Stellseite 32 der ersten Stell- und/oder Hebeeinrichtung 30 mit Druck zu beaufschlagen und bei positiver Druckdifferenz auszufahren, während andererseits die zweite Stellseite der zweiten Stell- und/oder Hebeeinrichtung 30 über die dritte Druckleitung 61C gegen das Fluidreservoir 54, insbesondere den Tank, entlastet ist. Hierüber kann die zweite Stell- und/oder Hebeeinrichtung 40, insbesondere die zweite Stellseite 42 während einem Verschwenken des Seitenrahmens 21A von der Transport- in die Arbeitsstellung oder im Betrieb in Arbeitsstellung, fluidisch entlastet und so zumindest nahezu drucklos und/oder stellkraftfrei betrieben werden. Alternativ oder zusätzlich zur fluidischen Entlastung, kann die zweite Stell- und/oder Hebeeinrichtung 40 während des Betriebs und in ausgeklappter Arbeitsstellung auch über eine mechanische Entkopplung zumindest nahezu stellkraftfrei vom Zentralrahmen 20 und/oder von dem mit der zweiten Stell- und/oder Hebeeinrichtung 40 verbundenen Seitenrahmen 21A entkoppelt sein. Durch eine derartige Entkopplung und/oder fluidische Entlastung ist eine Beeinflussung der Arbeitswerkzeuge 13 - 15, insbesondere einem Druck zwischen den Arbeitswerkzeugen 13 - 15 und dem Boden, durch die zweite Stell- und/oder Hebeeinrichtung 40 zumindest nahezu ausgeschlossen.

Darüber hinaus ist der Arbeitsmaschine 10, insbesondere der Verstelleinrichtung und/oder der Druckerzeugungs- und/oder Druckversorgungseinrichtung 51, ein Steuer- und/oder Regelsystem 70 zugeordnet, welches dazu eingerichtet ist, die Arbeitsmaschine 10 zu betreiben und die Druckerzeugungs- und/oder Druckversorgungseinrichtung 51 in bedarfsgerechter Weise anzusteuern und/oder zu regeln. Je nach Ausführungsvariante kann die Ansteuerung dabei automatisiert bzw. alternativ oder zusätzlich manuell, insbesondere über ein dem Steuer- und/oder Regelsystem zugeordnetes, Bedien- und/oder Anzeigemittel von einem Bediener erfolgen.

Um eine besonders gute Zugänglichkeit der Arbeitsmaschine 10 zu erreichen, wird die Verstellvorrichtung und/oder Druckerzeugungs- und/oder Druckversorgungseinrichtung 51 derart angesteuert, dass erfindungsgemäß der Seitenrahmen 21A, insbesondere zum Umfahren eines Hindernisses, zu Wartungszwecken und/oder zum Befüllen der Arbeitsmaschine 10, mittels der Verstellvorrichtung von der ausgeklappten Arbeitsstellung in die zusammengeklappte Transportstellung verschwenkt wird, während der andere Seitenrahmen 21B zumindest nahezu in der ausgeklappten Arbeitsstellung verbleibt, wie in der Fig.2 gezeigt ist. Der andere Seitenrahmen 21 kann weiterhin wie gezeigt Mittel 22 zum Begehen der Arbeitsmaschine 10 umfassen, die an der Oberseite des Seitenrahmens 21B angeordnet sind. Diese können beispielsweise dazu genutzt werden, dass ein Bediener für einen Befüllvorgang von der Seite über die Mittel 22, insbesondere zum Öffnen oder Schließen der Abdeckmittel 110, zum Vorratsbehälter 11 gelangen kann. Weiterhin kann durch den hochgeklappten Seitenrahmen 21A beispielsweise ein Befüllfahrzeug besonders nah an den Vorratsbehälter 11 heranfahren und diesen so in besonders einfacher Weise mit granularem Material befüllen.

Insbesondere ist vorgesehen, dass die Seitenrahmen 21A, 21B in einer fest vorgegebenen und/oder definierten Reihenfolge von der ausgeklappten Arbeitsstellung in die zusammengeklappte Transportstellung verschwenkt werden. Dies kann beispielsweise manuell durch Auswahl vorgegebener Stellungen, beispielsweise Arbeits-, Halbseiten- und/oder Transportstellung, und/oder durch eine zeitabhängige Betätigung der Verstellvorrichtung erfolgen. Alternativ oder zusätzlich kann die jeweilige Stellung der einzelnen Seitenrahmen 21A, 21B auch sensorisch erfassbar sein und/oder die Auswahl bzw. Betätigung automatisiert und situationsgerecht vom Steuer- und/oder Regelsystem erfolgen. Darüber hinaus wäre alternativ auch ein umschaltbarer Stellhebel denkbar, der vom Bediener manuell betätigbar ist und dazu eingerichtet ist, den Verschwenkvorgang zu initiieren.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Arbeitsmaschine
- 100: Zugdeichsel
- 11: Vorratsbehälter
- 110: Abdeckmittel
- 12: Verteileinrichtung
- 13: Materialablageeinrichtung
- 14: unterteilte Walze
- 15: Bodenbearbeitungswerkzeuge
- 120: Ausbringleitung
- 20: Zentralrahmen
- 21A, 21B: Seitenrahmen
- 210A, 210B: Schwenkachse
- 211A, 211B: angreifendes Drehmoment
- 211C: Ergänzungsmoment
- 22: Mittel zum Begehen der Arbeitsmaschine
- 30: erste Stell- und/oder Hebeeinrichtung
- 31: erste Stellseite
- 31A, 31B: Zwischenglied
- 32: zweite Stellseite
- 40: zweite Stell- und/oder Hebeeinrichtung
- 41: erste Stellseite
- 41A, 41B: Zwischenglied
- 42: zweite Stellseite
- 50: Schlepperhydraulik
- 51: Druckerzeugungs- und/oder Druckversorgungseinrichtung
- 52: Fördervorrichtung
- 53: Steuergerät
- 54: Fluidreservoir
- 60A-60C: Verbindungskupplung
- 61A-61C: Druckleitung
- 70: Steuer- und/oder Regelsystem
- F: Fahrtrichtung

## Patentansprüche

1. Landwirtschaftliche Arbeitsmaschine (10), insbesondere Sä- und/oder Bodenbearbeitungsmaschine, welche dazu eingerichtet ist, eine landwirtschaftliche Nutzfläche zu bearbeiten und/oder granulares Material, insbesondere Saatgut und/oder Dünger, auszubringen, mit zumindest einem Zentralrahmen (20) und zumindest zwei um jeweils eine, insbesondere zur Fahrtrichtung korrespondierende, horizontale Schwenkachse (210A, 210B) schwenkbare Seitenrahmen (21A, 21B), welche seitlich am Zentralrahmen (20) angeordnet sind, und mit zumindest einer Verstellvorrichtung, welche den Seitenrahmen (21A, 21B) und/oder dem Zentralrahmen (20) zugeordnet ist, und welche dazu eingerichtet ist, wenigstens einen der Seitenrahmen (21A, 21B) gegenüber dem Zentralrahmen (20), insbesondere zwischen einer zusammengeklappten Transport- und einer ausgeklappten Arbeitsstellung, zu verschwenken, **dadurch gekennzeichnet, dass** die Verstellvorrichtung zumindest eine zwischen den Seitenrahmen (21A, 21B) angeordnete, vorzugsweise die Seitenrahmen (21A, 21B) verbindende, erste Stell- und/oder Hebeeinrichtung (30) und zumindest eine zwischen einem der Seitenrahmen (21A, 21B) und dem Zentralrahmen (20) angeordnete, vorzugsweise den Seitenrahmen (21A, 21B) mit dem Zentralrahmen (20) verbindende, zweite Stell- und/oder Hebeeinrichtung (40) aufweist.

2. Arbeitsmaschine (10) nach Anspruch 1, **gekennzeichnet dadurch, dass** die erste Stell- und/oder Hebeeinrichtung (30) einerseits mit einem der Seitenrahmen (21A, 21B) und andererseits mit einem anderen Seitenrahmen (21A, 21B) verbunden ist; und die zweite Stell- und/oder Hebeeinrichtung (40) einerseits mit einem der Seitenrahmen (21A, 21B) und andererseits mit dem Zentralrahmen (20) verbunden ist.

3. Arbeitsmaschine (10) nach Anspruch 2, **dadurch gekennzeichnet, dass** die zweite Stell- und/oder Hebeeinrichtung (40), während des Betriebs und einer ausgeklappten Arbeitsstellung der Seitenrahmen (21A, 21B), zumindest nahezu stellkraftfrei vom Zentralrahmen (20) und/oder von dem mit der zweiten Stell- und/oder Hebeeinrichtung (40) verbundenen Seitenrahmen (21A, 21B) entkoppelt ist.

4. Arbeitsmaschine (10) nach zumindest einem der vorgenannten Ansprüche 1 bis 3, **dadurch gekennzeichnet, dass** mittels der ersten Stell- und/oder Hebeeinrichtung (30) zum Verschwenken wenigstens eines der Seitenrahmen (21A, 21B), insbesondere für eine Transportstellung, ein um die jeweiligen Schwenkachsen (210A, 210B) der Seitenrahmen (21A, 21B) angreifendes Drehmoment (211A, 211B) in die Seitenrahmen (21A, 21B) einleitbar ist, wobei mittels der zweiten Stell- und/oder Hebeeinrichtung (40) wenigstens ein zu einer der angreifenden Drehmomente (211A, 211B) zusätzliches und/oder korrespondierendes Ergänzungsmoment (211C) generierbar und/oder in einen der Seitenrahmen (21A, 21B) einleitbar ist.

5. Arbeitsmaschine (10) nach Anspruch 4, **dadurch gekennzeichnet, dass** das Ergänzungsmoment (211C) vom Betrag kleiner ist als das um die jeweilige Schwenkachse (210A, 210B) angreifende und/oder einleitbare Drehmoment (211A, 211B).

6. Arbeitsmaschine (10) nach zumindest einem der vorgenannten Ansprüche 1 bis 3, **dadurch gekennzeichnet, dass** mittels der ersten Stell- und/oder Hebeeinrichtung (30), zum Verschwenken wenigstens eines der Seitenrahmen (21A, 21B), insbesondere für eine Transportstellung, ein um die jeweiligen Schwenkachsen (210A, 210B) der Seitenrahmen (21A, 21B) angreifendes Drehmoment (211A, 211B) in die Seitenrahmen (21A, 21B) einleitbar ist, wobei mittels der zweiten Stell- und/oder Hebeeinrichtung (40) wenigstens ein zu einer der angreifenden Drehmomente (211A, 211B) gegensätzliches Ergänzungsmoment (211C) generierbar und/oder in einen der Seitenrahmen (21A, 21B) einleitbar ist.

7. Arbeitsmaschine (10) nach Anspruch 6, **dadurch gekennzeichnet, dass** das Ergänzungsmoment (211C) vom Betrag größer ist als das um die jeweilige Schwenkachse (210A, 210B) angreifende und/oder einleitbare Drehmoment (211A, 211B).

8. Arbeitsmaschine (10) nach zumindest einem der vorgenannten Ansprüche 1 bis 7, wobei die Verstellvorrichtung zumindest teilweise fluidisch, insbesondere hydraulisch und/oder pneumatisch, betreibbar ist, **dadurch gekennzeichnet, dass** eine mit fluidischem Druck beaufschlagbare Stellseite (31, 32) der ersten Stell- und/oder Hebeeinrichtung (30), vorzugsweise dauerhaft, fluidleitend mit einer mit fluidischem Druck beaufschlagbaren Stellseite (41, 42) der zweiten Stell- und/oder Hebeeinrichtung (40) verbindbar ist.

9. Arbeitsmaschine (10) nach Anspruch 8, **dadurch gekennzeichnet, dass** die zweite Stell- und/oder Hebeeinrichtung (40) wenigstens eine weitere Stellseite (41, 42) aufweist, welche, insbesondere während einem Verschwenken des damit verbundenen Seitenrahmens (21A, 21B) oder im Betrieb in einer ausgeklappten Arbeitsstellung, fluidisch zumindest im Wesentlichen entlastet, vorzugsweise zumindest nahezu drucklos und/oder stellkraftfrei, betreibbar ist.

10. Arbeitsmaschine (10) nach zumindest einem der vorgenannten Ansprüche 1 bis 9, mit wenigstens einem zugeordneten Steuer- und/oder Regelsystem (70), **dadurch gekennzeichnet, dass** die Verstellvorrichtung, insbesondere die Stell- und/oder Hebeeinrichtungen (30, 40) vorzugsweise manuell durch einen Bediener oder automatisiert, in fernbetätigter Weise mittels dem Steuer- und/oder Regelsystem (70) betätigbar ist.

11. Verfahren zum Betreiben einer landwirtschaftlichen Arbeitsmaschine (10) nach Art einer Sä- und/oder Bodenbearbeitungsmaschine, insbesondere einer Arbeitsmaschine (10) die nach zumindest einem der vorgenannten Ansprüche 1 bis 10 ausgebildet ist, mit zumindest einem, insbesondere waagerecht zur Nutzfläche ausgerichteten, Zentralrahmen (20) und zumindest zwei um jeweils eine, insbesondere zur Fahrtrichtung korrespondierende, horizontale Schwenkachse (210A, 210B) schwenkbare Seitenrahmen (21A, 21B), welche seitlich am Zentralrahmen (20) angeordnet sind, und mit zumindest einer Verstellvorrichtung, welche den Seitenrahmen (21A, 21B) und/oder dem Zentralrahmen (20) zugeordnet ist, und welche dazu eingerichtet ist, wenigstens einen der Seitenrahmen (21A, 21B) gegenüber dem Zentralrahmen (20) zwischen einer zusammengeklappten Transport- und einer ausgeklappten Arbeitsstellung zu verschwenken, **dadurch gekennzeichnet, dass** einer der Seitenrahmen (21A, 21B), vorzugsweise zum Umfahren eines Hindernisses und/oder zu Wartungs- und/oder Instandsetzungszwecken, und/oder besonders bevorzugt zum Befüllen der Arbeitsmaschine (10), mittels der Verstellvorrichtung, insbesondere von der ausgeklappten Arbeitsstellung in die zusammengeklappte Transportstellung, verschwenkt wird, während der zumindest eine andere Seitenrahmen (21A, 21B) zumindest nahezu in der ausgeklappten Arbeitsstellung oder der zusammengeklappten Transportstellung verbleibt.

12. Verfahren nach Anspruch 11, **dadurch gekennzeichnet, dass** die Seitenrahmen (21A, 21B), insbesondere vom Steuer- und/oder Regelsystem (70), in einer fest vorgegebenen und/oder definierten Reihenfolge, insbesondere von der ausgeklappten Arbeitsstellung in die zusammengeklappte Transportstellung, verschwenkt werden.

13. Verfahren nach zumindest einem der vorgenannten Ansprüche 11 und/oder 12, **dadurch gekennzeichnet, dass** die Verstellvorrichtung zumindest eine zwischen den Seitenrahmen (21A, 21B) angeordnete, vorzugsweise die Seitenrahmen (21A, 21B) verbindende, erste Stell- und/oder Hebeeinrichtung (30) und zumindest eine zwischen einem der Seitenrahmen (21A, 21B) und dem Zentralrahmen (20) angeordnete, vorzugsweise den Seitenrahmen (21A, 21B) mit dem Zentralrahmen (20) verbindende, zweite Stell- und/oder Hebeeinrichtung (40) aufweist, wobei über die erste Stell- und/oder Hebeeinrichtung (30) ein um die jeweiligen Schwenkachsen (210A, 210B) der Seitenrahmen (21A, 21B) angreifendes Drehmoment (211A, 211B) generiert wird, während über die zweite Stell- und/oder Hebeeinrichtung (40) wenigstens ein zu einer der angreifenden Drehmomente (211A, 211B) zusätzliches oder gegensätzliches Ergänzungsmoment (211C) generiert und/oder in einen der Seitenrahmen (21A, 21B) eingeleitet wird.

14. Verfahren nach Anspruch 13, **dadurch gekennzeichnet, dass** die zweite Stell- und/oder Hebeeinrichtung (40) mit einem der Seitenrahmen (21A, 21B) verbunden ist, wobei das Ergänzungsmoment (211C), insbesondere durch eine vom Steuer- und/oder Regelsystem (70) initiierte Betätigung, derart von der zweiten Stell- und/oder Hebeeinrichtung (40) generiert wird, dass, vorzugsweise zum Befüllen der Arbeitsmaschine (10), ausschließlich oder vorrangig der mit der zweiten Stell- und/oder Hebeeinrichtung (40) verbundene Seitenrahmen (21A, 21B) von der Arbeitsstellung in die Transportstellung verschwenkt wird.

15. Verfahren nach Anspruch 14, **dadurch gekennzeichnet, dass** die zweite Stell- und/oder Hebeeinrichtung (40) mit einem der Seitenrahmen (21A, 21B) verbunden ist, wobei das Ergänzungsmoment (211C), insbesondere durch eine vom Steuer- und/oder Regelsystem (70) initiierte Betätigung, derart von der zweiten Stell- und/oder Hebeeinrichtung (40) generiert wird, dass, vorzugsweise zum Befüllen der Arbeitsmaschine (10), ausschließlich oder vorrangig der nicht mit der zweiten Stell- und/oder Hebeeinrichtung (40) verbundene Seitenrahmen (21A, 21B) von der Arbeitsstellung in die Transportstellung verschwenkt wird.
